# EUROPEAN PATENT APPLICATION

(11) **EP 3 769 973 A1**
(43) Date of publication of application: **27.01.2021**
(21) Application number: 20185003.9
(22) Date of filing: 09.07.2020
(51) Int. Cl.: B60C 1/00, C08L 9/06

(54) **A RUBBER COMPOSITION AND A TIRE COMPRISING A TREAD**

(30) Priority: 25.07.2019 US 201962878492 P
(71) Applicant: The Goodyear Tire & Rubber Company, Akron, OH 44316 (US)
(72) Inventor: JACOBY, Claude Charles, 6615 Wasserbillig (LU); OCAMPO, Fabien, 57100 Thionville (FR)
(74) Representative: Goodyear IP Law

(57) **Abstract**

In a first aspect, the present invention is directed to a vulcanizable rubber composition comprising based on 100 parts by weight of elastomer (phr) from 80 phr to 100 phr of at least one SSBR having a glass transition temperature Tg ranging from -50°C to -85°C; optionally from 0 phr to 20 phr of polybutadiene having a glass transition temperature ranging from -85°C to -115°C; from 100 phr to 150 phr of silica; and an amount A of 15 phr to 40 phr of hydrocarbon resin and an amount B of 5 phr to 25 phr of an oil, wherein the sum of the amount A and the amount B is between 35 phr and 50 phr. Furthermore, the present invention is directed to a vulcanized rubber composition based on said vulcanizable rubber composition. Moreover, the present invention is directed to a tire comprising a tread with such a vulcanizable or vulcanized rubber composition.

## Description

### Field of the invention

The present invention is directed to a rubber composition, in particular a vulcanizable or sulfur-vulcanized rubber composition, preferably for tire treads. Moreover, the present invention is directed to a tire comprising such a rubber composition, in particular in a tire tread.

### Background

As known in the tire art, it has traditionally been difficult to improve multiple tire characteristics at the same time without considerable trade-offs in at least another characteristic. One of such conflicts exists between rolling resistance and wet performance. When rolling resistance is to be improved, there are typically trade-offs in wet grip. However, limiting rolling resistance is crucial to increase energy efficiency. Similarly, there is typically a conflict between wet and snow performance. If it is the target to improve snow performance, there is usually again a trade-off in wet performance. Thus, the development of advanced winter tires which offer both improved snow and wet grip performance has proven to be challenging. This applies even more if rolling resistance and snow performance are to be improved together.

An example of a winter tread compound has been suggested in United States Patent 9,764,594 allowing a compromise between wear and wet performance, while providing also advanced snow performance.

Other compounds have been suggested in International Patent Application No. 2017/117056 which aims at finding a compromise between different tire characteristics including aspects of winter performance.

While it may not always be possible to achieve improvements in all of the abovementioned properties, a significant room for improvement remains in the development of advanced winter tread compounds. Accordingly, there remains to be a long felt need for winter tires that offer a combination of improved wear characteristics, excellent traction on dry, wet, snow, and ice covered surfaces, and reduced rolling resistance for improved fuel economy.

### Summary of the invention

A first object of the invention may be to provide an advanced rubber composition, in particular suitable for treads of winter tires and/or all-season tires.

Another object of the invention may be to provide a rubber composition having advanced snow and/or rolling resistance performance with no, or at least limited, trade-off in wet performance and abrasion.

The present invention is defined by the scope of independent claim 1. Preferred embodiments are provided in the dependent claims as well as in the summary of the invention hereinbelow.

Thus, in one aspect of the invention, a vulcanizable rubber composition is provided. The rubber composition comprises, based on 100 parts by weight of elastomer (phr), from 80 phr to 100 phr of at least one solution-polymerized styrene butadiene rubber (SSBR) having a glass transition temperature (Tg) ranging from - 50°C to -85°C, optionally from 0 phr to 20 phr of at least one polybutadiene rubber having a glass transition temperature ranging from -85°C to -115°C, from 100 phr to 150 phr (preferably from 100 phr to 140 phr) of silica, optionally from 0 phr to 10 phr of carbon black, from 15 phr to 40 phr of at least one resin, preferably at least one hydrocarbon resin, and from 5 phr to 25 phr of at least one oil, wherein the sum of the amount of resin and the amount of oil is within a range of 35 phr to 50 phr.

This composition has turned out to be advantageous, in particular in view of the above objects, and supports an advanced balance between rolling resistance/snow performance and wet performance/treadwear.

In one embodiment the rubber composition further comprises at least one polybutadiene rubber, wherein the polybutadiene rubber has a glass transition temperature which is within a range of -85°C to -115°C, preferably of -100°C to - 115°C.

In a preferred embodiment, the polybutadiene rubber is present at a level of up to 20 phr.

In another preferred embodiment, the sum of the amount of the resin and the amount of the oil is between 35 phr and 45 phr, or between 35 phr and 43 phr.

In another embodiment, the resin is present at a level which is within a range of 20 phr to 35 phr, and/or the oil is present at a level which is within a range of 5 phr to 20 phr.

In another preferred embodiment, the ratio, by weight, of the oil to the resin is within the range of 1:1.5 to 1:3.5, or preferably of 1:1.5 to 1:3 (all by phr). Such ratios have been found to be most preferable.

In yet another embodiment, said resin has a glass transition temperature which is within a range of 30°C to 80°C, preferably of 60°C to 75°C, or even more preferably from 60°C to 70°C. Provision of a resin in this relatively high Tg range may help to further improve wet performance.

In a preferred embodiment the resin is a terpene resin. This resin type, preferably in combination with the above Tg properties, is particularly preferred.

In another embodiment, said oil has a glass transition temperature which is within the range of -70°C to -115°C. This is a relatively low temperature range.

In still another preferred embodiment, the oil is a triglyceride oil, preferably a vegetable oil. Preferably, the oil is selected from one or more of sunflower oil, soybean oil and canola oil, wherein sunflower oil is particularly preferred.

In still another embodiment, the solution-polymerized styrene butadiene rubber has a glass transition temperature which is within a range of -55°C to -65°C.

In another preferred embodiment, the rubber composition has a ratio of oil to resin of between 1:1.5 and 1:3.5 (preferably 3 or even 2.5), wherein the hydrocarbon resin has a glass transition temperature ranging from 50°C to 80°C and the oil has a glass transition temperature ranging between -70°C and -115°C. Together with the relatively low glass transition temperatures of the SSBR, and the PBD if used, the balance between snow performance, treadwear and wet grip can be improved. The glass transition temperature of an oil can be suitably determined as a peak midpoint by a differential scanning calorimeter (DSC) at a temperature rate of increase of 10°C per minute, according to ASTM E1356 or equivalent.

In yet another embodiment, the composition comprises less than 5 phr of polybutadiene rubber. In such an embodiment it is desired to minimize the amount of polybutadiene, e.g. in favor of SSBR.

In another embodiment, the solution-polymerized styrene butadiene rubber is present at a level which is within a range of 85 phr to 100 phr and wherein polybutadiene rubber is present at a level of no more than 15 phr.

In still another embodiment, the solution-polymerized styrene butadiene rubber is present at a level which is within a range of 85 phr to 90 phr and wherein polybutadiene rubber is present at a level within a range of 10 phr to 15 phr.

In yet another embodiment, the solution-polymerized styrene butadiene rubber is present at a level which is within the range of 85 phr to 95 phr and wherein polybutadiene rubber is present at a level which is within a range of 5 phr to 15 phr.

In yet another embodiment, the silica is present at a level which is within a range of 100 phr to 140 phr, preferably of 105 phr to 125 phr, or even more preferably of 105 to 120 phr.

In still another embodiment, the solution-polymerized styrene butadiene rubber has a styrene content which is within in a range of 4% to 20% by weight and/or a vinyl content which is within a range of 10% to 40% by weight, based on the butadiene content.

In another embodiment, suitable oils may include various oils, including aromatic, paraffinic, naphthenic, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. In particular, the oil may be a vegetable oil or vegetable oil derivate (such as sunflower oil, soybean oil or canola oil) or a blend of multiple oils, in particular sunflower oils. Some representative examples of vegetable oils that can be used include soybean oil, sunflower oil, canola (rapeseed) oil, corn oil, coconut oil, cottonseed oil, olive oil, palm oil, peanut oil, and safflower oil. In a preferred embodiment, said oil has a glass transition temperature ranging between -70°C and - 115°C, preferably from -75°C (or even -80°C) to -115°C. In particular, the low Tg of the oil may support snow performance. Merely as an example, such low Tg oil is available as Pionier™ TP 130 B or Pionier™ TP 130 C of the company H&R.

In still another embodiment, the rubber composition further comprises from 1 phr to 10 phr of a sulfur containing an organosilicon compound or silane. Such a silane may help to improve the binding of the silica to the rubber matrix. In the present case, such amounts of silane have been found to be desirable. In another preferred embodiment, the amount of silane ranges from 5 phr to 10 phr silane. In particular, examples of suitable sulfur containing organosilicon compounds / silanes are of the formula:

Z - Alk - Sn - Alk - Z I

in which Z is selected from the group consisting of: 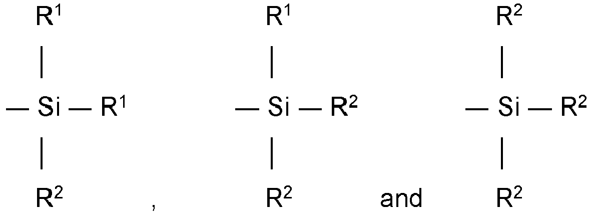 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In another embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 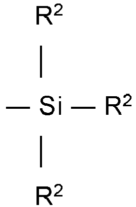 where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT™ from Momentive Performance Materials. In another embodiment, suitable sulfur containing organosilicon compounds include those disclosed in U.S. Patent Publication No. 2003/0130535. In one embodiment, the sulfur containing organosilicon compound is Si-363 from Degussa. The amount of the sulfur containing organosilicon compound in a rubber composition may vary depending on the level of other additives that are used.

In another embodiment, the rubber composition includes a hydrocarbon resin having a Tg greater than 30°C, preferably greater than 50°C, and more preferably greater than 60°C, and optionally lower than 100°C, such as hydrocarbon resins described in "Hydrocarbon Resins" by R. Mildenberger, M. Zander and G. Collin (New York, VCH, 1997, ISBN- 3-527-28617-9). Representative hydrocarbon resins include for instance coumarone-indene-resins, petroleum resins, terpene resins, alphamethyl styrene resins and mixtures thereof. In particular, such a relatively high resin Tg is considered to be beneficial for wet grip, with limited impact on rolling resistance.

Coumarone-indene resins are commercially available in many forms with melting points ranging from 10° to 160°C (as measured by the ball-and-ring method). Preferably, the melting point ranges from 30° to 100°C. Coumarone-indene resins as such are well known. Various analysis indicate that such resins are largely polyindene; however, typically contain random polymeric units derived from methyl indene, coumarone, methyl coumarone, styrene and methyl styrene.

Petroleum resins are commercially available with softening points ranging from 10°C to 120°C. Preferably, the softening point ranges from 30° to 100°C. Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include dicyclopentadiene, cyclopentadiene, their dimers and diolefins such as isoprene and piperylene.

In a preferred embodiment, terpene resins are used in the present composition. Terpene polymers (or resins) may be typically commercially produced from polymerizing alpha or beta pinenes. In particular, alpha pinene based resins may be used. Terpene resins may be supplied in a variety of melting points ranging from 10°C to 135°C. The terpene resins may for example have a molecular weight M_{w} of less than 1000 g/mol, preferably less than 950 g/mol or ranging between 200 g/mol and 950 g/mol, as measured by gel permeation chromatography (GPC). An example of an alpha pinene based resin is Dercolyte™ A 115 of the company DRT which has a molecular weight M_{w} of about 900 g/mol.

In one embodiment, the resin is derived from styrene and alphamethylstyrene. The presence of the styrene/alphamethylstyrene resin with a rubber blend which contains the presence of the styrene-butadiene elastomer is considered herein to be beneficial because of observed viscoelastic properties of the tread rubber composition such as complex and storage modulus, loss modulus, tangent delta and loss compliance at different temperature/frequency/strain. The properties of complex and storage modulus, loss modulus, tangent delta and loss compliance are understood to be generally well known to those having skill in such art. The molecular weight distribution of the resin is visualized as a ratio of the resin's molecular weight average (Mw) to molecular weight number average (Mn) values and is considered herein to be in a range of about 1.5/1 to about 2.5/1 which is considered to be a relatively narrow range. This is believed to be advantageous because of the selective compatibility with the polymer matrix and because of a contemplated use of the tire in wet and dry conditions over a wide temperature range. The glass transition temperature Tg of the copolymer resin is considered herein to be in a range of about 20°C to about 100°C, alternatively about 50°C to about 70°C. A suitable measurement of Tg for resins is DSC according to ASTM D6604 or equivalent. The styrene/alphamethylstyrene resin is considered herein to be a copolymer of styrene and alphamethylstyrene with a styrene/alphamethylstyrene molar ratio in a range of about 0.40 to about 1.50. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely, its styrene and alphamethylstyrene contents and softening point and also, if desired, by its glass transition temperature, molecular weight and molecular weight distribution. In one embodiment, the styrene/alphamethylstyrene resin is composed of about 40 to about 70 percent units derived from styrene and, correspondingly, about 60 to about 30 percent units derived from alphamethylstyrene. In one embodiment, the styrene/alphamethylstyrene resin has a softening point according to ASTM No. E-28 in a range of about 80°C to about 145°C. Suitable styrene/alphamethylstyrene resin is available commercially as Resin 2336 from Eastman or Sylvares SA85 from Arizona Chemical.

In another embodiment, the rubber composition comprises from 105 phr to 125 phr of silica, and optionally from 105 phr to 120 phr of silica. Such relatively high amounts of silica have been found to be of particular interest in the present composition, in particular to allow improved wet traction. A reduction of the silica amount may result in improvements in rolling resistance. Commonly employed siliceous pigments which may be used in the rubber compound include for instance conventional pyrogenic and precipitated siliceous pigments (silica). In one embodiment, precipitated silica is used. The conventional siliceous pigments may be precipitated silicas such as, for example, those obtained by the acidification of a soluble silicate, e.g., sodium silicate. Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930). The conventional silica may also be characterized by having a dibutylphthalate (DBP) absorption value in a range of 100 to 400, alternatively 150 to 300. A conventional silica might be expected to have an average ultimate particle size, for example, in the range of 0.01 to 0.05 micron as determined by the electron microscope, although the silica particles may be even smaller, or possibly larger, in size. Various commercially available silicas may be used, such as, only for example herein, and without limitation, silicas commercially available from PPG Industries under the Hi-Sil trademark with designations 210, 315G, EZ160G, etc; silicas available from Solvay, with, for example, designations of Z1165MP and Premium200MP, etc. and silicas available from Evonik AG with, for example, designations VN2 and Ultrasil 6000GR, 9100GR, etc. In another embodiment, the silica has a BET surface area of between 100 m²/g and 250 m²/g.

In another embodiment, the silica may be pre-hydrophobated (or pre-silanized) precipitated silica. By pre-hydrophobated, it is meant that the silica is pretreated, i.e., the pre-hydrophobated precipitated silica is hydrophobated prior to its addition to the rubber composition by treatment with at least one silane. Suitable silanes include but are not limited to alkylsilanes, alkoxysilanes, organoalkoxysilyl polysulfides and organomercaptoalkoxysilanes. In an alternative embodiment, the pre-hydrophobated precipitated silica may be pre-treated with a silica coupling agent comprised of, for example, an alkoxyorganomercaptoalkoxysilane or combination of alkoxysilane and organomercaptoalkoxysilane prior to blending the pre-treated silica with the rubber instead of reacting the precipitated silica with the silica coupling agent in situ within the rubber. For example, see United States Patent 7,214,731. The pre-hydrophobated precipitated silica may optionally be treated with a silica dispersing aid. Such silica dispersing aids may include glycols such as fatty acids, diethylene glycols, polyethylene glycols, fatty acid esters of hydrogenated or non-hydrogenated C5 or C6 sugars, and polyoxyethylene derivatives of fatty acid esters of hydrogenated or non-hydrogenated C5 or C6 sugars. Exemplary fatty acids include stearic acid, palmitic acid and oleic acid. Exemplary fatty acid esters of hydrogenated and non-hydrogenated C5 and C6 sugars (e.g., sorbose, mannose, and arabinose) include, but are not limited to, the sorbitan oleates, such as sorbitan monooleate, dioleate, trioleate and sesquioleate, as well as sorbitan esters of laurate, palmitate and stearate fatty acids. Exemplary polyoxyethylene derivatives of fatty acid esters of hydrogenated and non-hydrogenated C5 and C6 sugars include, but are not limited to, polysorbates and polyoxyethylene sorbitan esters, which are analogous to the fatty acid esters of hydrogenated and non-hydrogenated sugars noted above except that ethylene oxide groups are placed on each of the hydroxyl groups. Optional silica dispersing aids if used are present in an amount ranging from about 0.1 % to about 25 % by weight based on the weight of the silica, with about 0.5% to about 20% by weight being suitable, and about 1% to about 15% by weight based on the weight of the silica also being suitable. For various pre-treated precipitated silicas see, for example, United States Patent 4,704,414, United States Patent 6,123,762, and United States Patent 6,573,324.

In an embodiment, the rubber composition may include carbon black. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. These carbon blacks have iodine absorptions ranging from 9 to 145 g/kg and DBP number ranging from 34 cm³/100 g to 150 cm³/100 g. However, the amount of carbon black is desired to be rather small in the present compositions so that the composition comprises in an embodiment even less than 5 phr of carbon black, preferably between 1 phr and 5 phr of carbon black.

In another embodiment, other fillers may additionally be used in the rubber composition including, but not limited to, particulate fillers including ultra-high molecular weight polyethylene (UHMWPE), crosslinked particulate polymer gels including but not limited to those disclosed in United States Patent 6,242,534; United States Patent 6,207,757; United States Patent 6,133,364; United States Patent 6,372,857; United States Patent 5,395,891; and United States Patent 6,127,488, and plasticized starch composite fillers including but not limited to that disclosed in United States Patent 5,672,639.

In one embodiment, cis 1,4-polybutadiene rubber (BR or PBD) may be prepared, for example, by organic solution polymerization of 1,3-butadiene. The BR may in general be conveniently characterized, for example, by having at least a 90 percent cis 1,4-content. Suitable polybutadiene rubbers are available commercially, such as Budene® 1207, Budene® 1208, or Budene® 1223 high cis-1,4-polybutadiene rubber from The Goodyear Tire & Rubber Company. In still another embodiment, the polybutadiene has a glass transition temperature from -100°C to - 115°C or from -100°C to -110°C. The relatively low Tg of the polybutadiene is amongst others of interest to keep the compound in a preferred Tg range for winter properties.

In general, a reference to a glass transition temperature, or Tg, of an elastomer or elastomer composition, where referred to herein, represents the glass transition temperature of the respective elastomer or elastomer composition in its uncured state. A Tg is determined as a peak midpoint by a differential scanning calorimeter (DSC) at a temperature rate of increase of 10°C per minute, according to ASTM D3418 or equivalent.

The term "phr" as used herein, and according to conventional practice, refers to parts by weight of a respective material per 100 parts by weight of rubber, or elastomer. In general, using this convention a rubber composition is comprised of 100 parts of by weight of the rubber/elastomer.

The claimed composition may comprise further rubbers / elastomers than explicitly mentioned in the claims, provided that the phr value of the claimed rubbers / elastomers is in accordance with claimed phr ranges and the amount of all rubbers / elastomers in the composition results in total in 100 parts of rubber. In an example, the composition may further comprise from 1 phr to 5 phr of one or more additional diene-based rubbers, such as styrene butadiene rubber (SBR), SSBR, emulsion-polymerized styrene butadiene rubber (ESBR), PBD, natural rubber (NR) and/or synthetic polyisoprene. In another example, the composition may only include less than 5 phr, preferably less than 3 phr of an additional diene-based rubber or be also essentially free of such an additional diene-based rubber. The terms "compound" and "composition" may be used herein interchangeably, unless indicated otherwise. If an amount of ingredient is mentioned with "up to" herein, this shall include also the option of 0 (zero) phr of that ingredient or "from 0 to".

In another embodiment, the SSBR may for instance have a bound styrene content in a range of 5% to 50%, preferably 9% to 36%. In still another embodiment, the SSBR has a styrene content in the range of between 10% and 20% by weight and a vinyl content in the range of between 20% and 40% by weight, based on the butadiene content. In still another embodiment, the SSBR has a styrene content in the range of between 4% and 15% by weight and a vinyl content in the range of between 10% and 25% by weight, based on the butadiene content. In still another embodiment, the solution styrene butadiene rubber is a tin-coupled polymer. In still another embodiment, the SSBR is functionalized, as e.g. for improved compatibility with the silica. In addition, or alternatively, the SSBR is thio-functionalized. This may help to improve stiffness of the compound and/or its hysteresis behavior. Thus, for instance, the SSBR may be a thio-functionalized and/or tin-coupled solution-polymerized copolymer of butadiene and styrene.

It is readily understood by those having skill in the art that the rubber composition may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively with a range of from 1 phr to 3 phr. Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one non-productive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding non-productive mix stage(s). The terms "non-productive" and "productive" mix stages are well known to those having skill in the rubber mixing art. In an embodiment, the rubber composition may be subjected to a thermomechanical mixing step. The thermomechanical mixing step generally comprises a mechanical working in a mixer or extruder for a period of time, for example suitable to produce a rubber temperature between 140°C and 190°C. The appropriate duration of the thermomechanical working varies as a function of the operating conditions, and the volume and nature of the components. For example, the thermomechanical working may be from 1 to 20 minutes.

In another aspect of the invention, the invention is directed to a vulcanized rubber composition wherein the vulcanizable rubber composition according to one or more of the aforementioned aspects or embodiments is sulfur-vulcanized.

In a further aspect of the invention, a tire is provided, the tire comprising either the vulcanizable or the vulcanized rubber composition in accordance with one or more of the above mentioned aspects and/or one of its embodiments.

In a preferred embodiment, the rubber composition is a tread rubber composition.

In a further aspect of the invention, a tire is provided, the tire having a tread comprising a rubber composition, wherein the rubber composition comprises, based on 100 parts by weight of elastomer (phr), from 80 phr to 100 phr of an SSBR having a glass transition temperature Tg in a range from -50°C to -85°C; from 0 phr to 20 phr of polybutadiene having a glass transition temperature Tg in a range from -85°C to -115°C; from 100 phr to 150 phr (preferably 140 phr) of silica; from 0 phr to 10 phr of carbon black; an amount A of 15 phr to 40 phr of a hydrocarbon resin and an amount B of 5 phr to 25 phr of oil, wherein a sum of the amount A and the amount B is between 35 phr and 50 phr. In a preferred embodiment A and B are plasticizers.

In particular, the tire may be one of: a radial tire, a pneumatic tire, a non-pneumatic tire, a truck tire and a passenger car tire. The tire may for instance be a winter tire and/or may have a three peak mountain snow flake symbol. Thus, the tire may have a plurality of tread blocks having a plurality of sipes.

Vulcanization of the pneumatic tire of the present invention may for instance be carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

It is emphasized that one or more aspects, embodiments, or features thereof, may be combined with one other within the scope of the present invention.

### Brief description of the drawings

The structure, operation, and advantages of the invention will become more apparent upon contemplation of the following description taken in conjunction with the accompanying drawing, wherein:

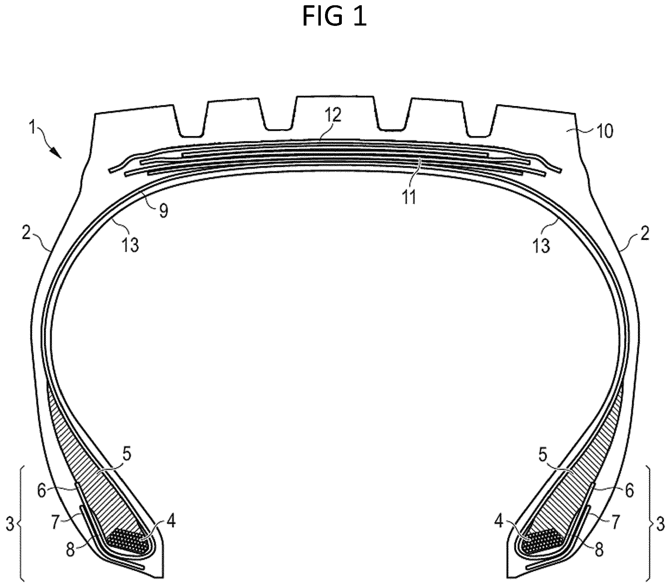

Figure 1 is a schematic cross section of a tire comprising a tread and further rubber components.

### Detailed description of the embodiments

Figure 1 is a schematic cross-section of a tire 1. The tire 1 has a tread 10, an inner liner 13, a belt structure comprising four belt plies 11, a carcass ply 9, two sidewalls 2, and two bead regions 3 comprising bead filler apexes 5 and beads 4. The example tire 1 is suitable, for example, for mounting on a rim of a vehicle, e.g. a truck or a passenger car. As shown in Figure 1, the belt plies 11 may be covered by an overlay ply 12. The carcass ply 9 includes a pair of axially opposite end portions 6, each of which is associated with a respective one of the beads 4. Each axial end portion 6 of the carcass ply 9 may be turned up and around the respective bead 4 to a position to anchor each axial end portion 6. The turned-up portions 6 of the carcass ply 9 may engage the axial outer surfaces of two flippers 8 and axial inner surfaces of two chippers 7. As shown in Figure 1, the example tread 10 may have four circumferential grooves, each groove essentially defining a U-shaped opening in the tread 10. The tread 10 comprises one or more tread compounds as described herein in accordance with embodiments of the invention.

While the embodiment of Figure 1 suggests a plurality of tire components including for instance apexes 5, chippers 7, flippers 8 and an overlay 12, such components are not mandatory for the invention. Also, the turned-up end of the carcass ply 9 is not necessary for the invention or may pass on the opposite side of the bead area 3 and end on the axially inner side of the bead 4 instead of the axially outer side of the bead 4. The tire could also have for instance more or less than four grooves. In particular, the present invention is essentially directed to a tire tread 10 and a vulcanizable rubber composition which can for instance be used in such a tread 10. Thus, the present invention shall not be limited to the example of the tire 1 depicted and described in accordance with Figure 1.

Preferred examples of a rubber composition for a tire tread 10, which are in accordance with preferred embodiments of the invention are shown in Table 1 in comparison with a Control Sample. Compared with the Control Sample, the amount of SSBR has been substantially increased and the amount of polybutadiene rubber has been decreased in the three Inventive Examples. Moreover, the amount of silica has been decreased with regards to the Control. The total amount of resin and oil has been decreased as well in comparison with the Control.

**TABLE 1**

| **Material** | Parts by weight (phr) | | | |
|---|---|---|---|---|
| | **Control** | **Inventive Example 1** | **Inventive Example 2** | **Inventive Example 3** |
| SSBR¹ | 75 | 90 | 100 | 80 |
| PBR (Tg -108°C)² | 25 | 10 | 0 | 0 |
| PBR (Tg -87°C)³ | 0 | 0 | 0 | 20 |
| Silica⁴ | 125 | 115 | 115 | 115 |
| Resin 1⁵ | 30 | 0 | 0 | 0 |
| Resin 2⁶ | 0 | 28 | 26 | 32 |
| Oil 1⁷ | 20 | 0 | 0 | 0 |
| Oil 2⁸ | 0 | 11.5 | 18.5 | 12.5 |
| Antidegradants⁹ | 3 | 3 | 3 | 3 |
| Waxes | 1.5 | 1.5 | 1.5 | 1.5 |
| Sulfur | 1.2 | 1.2 | 1.2 | 1.3 |
| Silane¹⁰ | 7.8 | 7.2 | 7.2 | 7.2 |
| Accelerators¹¹ | 4.9 | 4.8 | 6.1 | 5.3 |
| Stearic Acid | 5 | 2 | 2 | 2 |
| Zinc Oxide | 2.5 | 2.5 | 2.5 | 2.5 |

| | | | | |
|---|---|---|---|---|
| ¹Solution-polymerized styrene butadiene rubber as Sprintan™ SLR 3402 from Trinseo™ having a Tg of about - 60°C **²** Cis-1,4 polybutadiene rubber as Budene™ 1223 from the Goodyear Tire and Rubber Company, having a Tg of about-108°C ³ 1,4 polybutadiene rubber with 10 %-12 % vinyl content and a Tg of about -87°C ⁴ Precipitated silica with a surface area of about 125 m²/g ⁵ Copolymer of styrene and alpha-methylstyrene with a Tg of 39°C, obtained as Sylvatraxx 4401 from Arizona Chemicals ⁶ Terpene (alpha pinene based) resin having a Tg of about 70°C as Dercolyte™ A 115 ⁷ Low PCA type, treated distilled aromatic extract (TDAE) oil, with a Tg of about -46°C ⁸ Sunflower oil, with a Tg of about -80°C ⁹ Mixed p-phenylene diamine type ¹⁰ As SI266™ coupling agent from Evonik Industries ¹¹ Sulfenamide and guanidine types | | | | |

Table 2 discloses mechanical test results for the Control composition and the Inventive Examples 1-3 disclosed in Table 1. Rebound values at all measured temperatures have improved. While lower rebound measurements at -10°C are indicators for even slightly improved wet performance, the higher rebound test values at 23°C are indicators for significantly better rolling resistance. Also, tangent delta values at 100°C have significantly decreased when comparing the Inventive Examples with the Control Sample, which can also be considered as an indicator for improved hysteresis behavior and thus less rolling resistance for the Inventive Examples. Abrasion test results, normalized to the Control Sample, remain almost flat for Inventive Example 1 but for Inventive Example 2 and Inventive Example 3 significant improvements have been observed. Finally, the storage modulus E' shows also remarkable improvements at low temperature (-40°C) which can be considered as a predictor for improved snow performance (wherein small values of E' are desirable for that property). In summary, compared to the Control, the Inventive Examples suggest good wet and treadwear performance while improving significantly rolling resistance and snow performance.

Consequently, the Inventive Example tread compositions could be preferred candidates for an all-season tread rubber compound or a winter tread rubber compound.

**TABLE 2**

| **Test** | **Samples** | | | |
|---|---|---|---|---|
| | **Control** | **Inventive Example 1** | **Inventive Example 2** | **Inventive Example 3** |
| Elongation at Break (%) ^{a} | 588 | 568 | 540 | 556 |
| 300 % Modulus (MPa) ^{a} | 6.7 | 8.7 | 8.3 | 8.0 |
| Tensile strength (MPa) ^{a} | 15.1 | 19.2 | 17.1 | 17.6 |
| Rebound at -10°C (%) ^{b} | 11.9 | 11.6 | 11.4 | 11.5 |
| Rebound at 23°C (%) ^{b} | 33.2 | 40.6 | 44.1 | 42.9 |
| Tan Delta at 100°C ^{c} | 0.18 | 0.14 | 0.14 | 0.15 |
| Abrasion - DIN (Rating) ^{d} | 100 | 101 | 121 | 146 |
| E' at -40°C (MPa) ^{e} | 126 | 103 | 116 | 105 |

| | | | | |
|---|---|---|---|---|
| ^{a} Ring sample test based on ASTM D412 / DIN 53504, percentages are percentages of elongation, respectively strain; tensile strength is stress at break. ^{b} Rebound measured on a Zwick Roell 5109 rebound resilience tester according to DIN 53512 / ASTM D1054 at given temperature. ^{c} Data obtained with an RPA 2000™ Rubber Process Analyzer of Alpha Technologies based on ASTM D5289. ^{d} Rotary drum abrasion test according to DIN 53516, results are normalized to the control sample. ^{e} Test of dynamic mechanical properties at forced sinusoidal tension including storage modulus E', according to ISO 6721. | | | | |

Variations in the present invention are possible in light of the provided description. In any case, the above described embodiments and examples shall not be understood in a limiting sense.

## Claims

1. A vulcanizable rubber composition comprising:
from 80 phr to 100 phr of at least one solution-polymerized styrene butadiene rubber having a glass transition temperature which is within a range of -50°C to - 85°C;
from 100 phr to 150 phr of silica;
from 15 phr to 40 phr of at least one hydrocarbon resin; and
from 5 phr to 25 phr of at least one oil, wherein the sum of the amount of the hydrocarbon resin and the amount of the oil is within a range of 35 phr to 50 phr.

2. The vulcanizable rubber composition of claim 1, further comprising at least one polybutadiene rubber, wherein the polybutadiene rubber has a glass transition temperature which is within a range of -85°C to -115°C, and preferably within a range of -100°C to -115°C, and/or wherein the polybutadiene rubber is present at a level of up to 20 phr.

3. The vulcanizable rubber composition of claim 1 or 2, further comprising carbon black, optionally at a level of up to 10 phr.

4. The vulcanizable rubber composition according to one or more of the preceding claims,
wherein the sum of the amount of the hydrocarbon resin and the amount of the oil is between 35 phr and 45 phr; and/or
wherein the hydrocarbon resin is present at a level which is within a range of 20 phr to 35 phr; and/or
wherein the oil is present at a level which is within a range of 5 phr to 20 phr; and/or
wherein the ratio, by weight, of the oil to the hydrocarbon resin is within the range of 1:1.5 to 1:3.5.

5. The vulcanizable rubber composition according to one or more of the preceding claims, wherein the hydrocarbon resin has a glass transition temperature which is within a range of 30°C to 80°C, preferably of 60°C to 75°C; and/or wherein the hydrocarbon resin is a terpene resin.

6. The vulcanizable rubber composition according to one or more of the preceding claims, wherein the oil has a glass transition temperature which is within the range of -70°C to -115°C.

7. The vulcanizable rubber composition according to one or more of the preceding claims, wherein the oil is a triglyceride oil, preferably a vegetable oil.

8. The vulcanizable rubber composition according to one or more of the preceding claims wherein the oil is selected from one or more of sunflower oil, soybean oil and canola oil.

9. The vulcanizable rubber composition according to one or more of the preceding claims, wherein the solution-polymerized styrene butadiene rubber has a glass transition temperature which is within a range of -55°C to -65°C.

10. The vulcanizable rubber composition according to one or more of the preceding claims, comprising less than 5 phr of polybutadiene rubber.

11. The vulcanizable rubber composition according to one or more of claims 1 to 9, wherein the solution-polymerized styrene butadiene rubber is present at a level which is within a range of 85 phr to 100 phr and wherein polybutadiene rubber is present at a level of no more than 15 phr.

12. The vulcanizable rubber composition according to one or more of claims 1 to 9,
wherein the solution-polymerized styrene butadiene rubber is present at a level which is within a range of 85 phr to 90 phr and wherein polybutadiene rubber is present at a level within a range of 10 phr to 15 phr; or
wherein the solution-polymerized styrene butadiene rubber is present at a level which is within the range of 85 phr to 95 phr and wherein polybutadiene rubber is present at a level which is within a range of 5 phr to 15 phr; and/or
wherein the silica is present at a level which is within a range of 100 phr to 140 phr, preferably within a range of 105 phr to 125 phr.

13. The vulcanizable rubber composition according to one or more of the preceding claims, wherein the solution-polymerized styrene butadiene rubber has a styrene content which is within in a range of 4% to 20% by weight and/or a vinyl content which is within a range of 10% to 40% by weight, based on the butadiene content.

14. A vulcanized rubber composition, wherein the vulcanizable rubber composition according to one or more of the preceding claims is sulfur-vulcanized.

15. A tire having a tread comprising a rubber composition according to one or more of the preceding claims, and wherein the tire has optionally a plurality of tread blocks having a plurality of sipes.
